(19) Europäisches Patentamt
European Patent Office
Office européen des brevets

(11) **EP 3 656 585 B1**

(12) **EUROPEAN PATENT SPECIFICATION**

(45) Date of publication and mention
of the grant of the patent:
**17.05.2023 Bulletin 2023/20**

(51) International Patent Classification (IPC):
**B60C 23/00** (2006.01)        **B60C 23/04** (2006.01)

(21) Application number: **19191898.6**

(52) Cooperative Patent Classification (CPC):
**B60C 23/002;** B60C 23/0405

(22) Date of filing: **15.08.2019**

(54) **VEHICLE AND METHOD OF CONTROLLING THE SAME**

FAHRZEUG UND VERFAHREN ZUR STEUERUNG DESSELBEN

VÉHICULE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2018 KR 20180143553**

(43) Date of publication of application:
**27.05.2020 Bulletin 2020/22**

(73) Proprietors:
• **HYUNDAI MOTOR COMPANY
Seoul 06797 (KR)**
• **Kia Corporation
Seocho-gu
Seoul 06797 (KR)**

(72) Inventor: **HONG, Wang Gi
18280 Hwaseong-si, Gyeonggi-do (KR)**

(74) Representative: **Viering, Jentschura & Partner
mbB
Patent- und Rechtsanwälte
Am Brauhaus 8
01099 Dresden (DE)**

(56) References cited:
WO-A1-2012/082019      JP-A- 2001 304 948
US-A1- 2017 225 535      US-A1- 2017 359 957
US-B2- 9 511 634

**Description**

TECHNICAL FIELD

The present invention relates to a vehicle capable of providing optimum tire pressure information according to a weight of the vehicle, and a method of controlling the vehicle.

BACKGROUND

A vehicle has wheels in which a space formed between the circumferential surface of each of the wheels and the inner surface of a tire is filled with air at an appropriate pressure. The tire must maintain a proper air pressure for safe operation.

When a weight of the vehicle is increased due to the loading of a person or a load on the vehicle, a tire pressure needs to be adjusted. When the air pressure of the tire is not adjusted despite the increase of the weight of the vehicle, the stability of the vehicle may be deteriorated because the behavior of the vehicle becomes unstable or handling becomes unstable.

Conventionally, a sticker describing tire pressure information related to the weight of the vehicle has been attached to the bottom of a pillar of the vehicle or the inside of a vehicle door. However, since it is difficult for a user to recognize the sticker, it is difficult for the user to know the appropriate tire pressure information corresponding to the weight of the vehicle. Therefore, it is difficult to adjust the tire pressure appropriately.

US 9 511 634 B2 discloses that a vehicle tire pressure control system includes a road sensor configured to acquire road data regarding a road at an advanced location ahead of a current location of a vehicle; a pressure regulator configured to control the air pressure within a tire of the vehicle during operation of the vehicle; and a controller configured to control operation of the pressure regulator and vary the air pressure within the tire based on the road data.

US 2017/359957 A1 discloses that an agricultural vehicle is operable in a first state for transport and in a second state for field work and includes a frame supported by a plurality of tires. A processor is operable to receive a signal generated as a result of the agricultural vehicle transitioning from the first state to the second state or from the second state to the first state. A gas system is operable to modify the tire pressure of the plurality of tires of the agricultural vehicle in response to the signal.

WO 2012/082019 A1 discloses a method for verifying an engine torque estimation, comprising the steps of estimating the engine torque based on the amount of fuel injected into the engine, where the engine torque is obtained from a fuel injection table, estimating a first vehicle weight value by a calculation based on acceleration of the vehicle and the estimated engine torque, estimating an auxiliary brake torque by using an auxiliary brake table, estimating a second vehicle weight value by a calculation based on the estimated auxiliary brake torque, and comparing the first vehicle weight value with the second vehicle weight value. The advantage of the invention is that it is possible to detect if an actual engine torque value deviates from the original engine torque value of a vehicle without measuring the engine torque with a separate torque sensor.

JP 2001 304948 A discloses a vehicle weight-detecting device for achieving accurate control based on a calculation result by constantly calculating the weight of a vehicle accurately regardless of the driving state of the vehicle.

US 2017/225535 A1 discloses a method of setting the rides height of the air springs and air pressures of the tires, including receiving a user selected setting or preprogrammed ride height settings; sensing a ride height of, and air pressure within, each of the air springs; determining the weight of the vehicle based on the sensed ride height and air pressure within each of the air springs; providing specified ride heights for the left and right front and rear air springs; determining specified air pressures for the left and right front and rear tire inflators, based upon the determined weight of the vehicle and selected setting; inflating the left and right front and rear air springs to the specified ride heights; and inflating the left and right front and rear tires to the specified air pressures.

SUMMARY

An objective of the invention is to provide a vehicle capable of calculating a weight of the vehicle and intuitively providing optimum tire pressure information corresponding to the calculated weight of the vehicle and state information of a current tire pressure.

Additional aspects of the invention will be set forth in part in the description which follows and, in part, will be obvious from the description, or may be learned by practice of the invention.

The invention is defined by a vehicle according to claim 1 and a method of controlling a vehicle according to claim 8. Further embodiments are described in the dependent claims.

In accordance with an embodiment of the invention, a vehicle includes: a tire pressure sensor installed on a tire, configured to measure a tire pressure, and to transmit the tire pressure as an electrical signal; a storage configured to store optimum tire pressure data corresponding to a weight of the vehicle; a controller configured to calculate the weight of the vehicle, compare the tire pressure with the optimum tire pressure corresponding to the weight of the vehicle, determine whether a difference value between the tire pressure and the optimum tire pressure corresponding to the weight of the vehicle is the value within a predetermined threshold range, and generate state information of the tire pressure; and a user interface configured to output the state information of the tire pressure, wherein the state information of the tire pressure includes an insufficient state, an appropriate state, or a transient state, the controller is further configured to generate the state information of the tire pressure for each of a front left tire, a front right tire, a rear left tire, and a rear right tire, and control the user interface to selectively output the state information of the tire pressure for each of the front left tire, the front right tire, the rear left tire, and the rear right tire in response to a user's input.

The controller may determine that the state of the measured tire pressure is in the appropriate state when a difference value between the measured tire pressure and the optimum tire pressure is a value within a predetermined threshold range.

The controller may determine that the state of the measured tire pressure is in the insufficient state when a difference value between the measured tire pressure and the optimum tire pressure is a negative value outside a predetermined threshold range.

The controller may determine that the state of the measured tire pressure is in the transient state when a difference value between the measured tire pressure and the optimum tire pressure is a positive value outside a predetermined threshold range.

The controller may calculate the weight of the vehicle using engine torque and acceleration.

The vehicle may further include a weight sensor configured to measure the weight of the vehicle and to transmit the measured the weight of the vehicle as the electrical signal. The controller may receive weight information of the vehicle from the weight sensor.

The vehicle may further include a tire pressure regulator configured to adjust the tire pressure based on the state information of the tire pressure.

In accordance with another embodiment of the present invention, a method of controlling a vehicle includes: calculating, by a controller, a weight of the vehicle; retrieving, by the controller, optimum tire pressure data corresponding to the weight of the vehicle; measuring a tire pressure using a tire pressure sensor; determining, by the controller, whether a difference value between the tire pressure and the optimum tire pressure data corresponding to the weight of the vehicle is the value within a predetermined threshold range; generating, by the controller, state information of the tire pressure by comparing the optimum tire pressure with the tire pressure; generating the state information of the tire pressure for each of a front left tire, a front right tire, a rear left tire, and a rear right tire; and outputting, by the controller, selectively the state information of the tire pressure for each of the front left tire, the front right tire, the rear left tire, and the rear right tire in response to a user's input through a user interface, wherein the state information of the tire pressure includes an insufficient state, an appropriate state, or a transient state.

The generating of the state information of the tire pressure may include determining that the state of the measured tire pressure is in the appropriate state when a difference value between the measured tire pressure and the optimum tire pressure is a value within a predetermined threshold range.

The generating of the state information of the tire pressure may include determining that the state of the measured tire pressure is in the insufficient state when a difference value between the measured tire pressure and the optimum tire pressure is a negative value outside a predetermined threshold range.

The generating of the state information of the tire pressure may include determining that the state of the measured tire pressure is in the transient state when a difference value between the measured tire pressure and the optimum tire pressure is a positive value outside a predetermined threshold range.

The calculating of the weight of the vehicle may include calculating the weight of the vehicle using engine torque and acceleration.

The calculating of the weight of the vehicle may include receiving weight information of the vehicle measured by a weight sensor.

The method may further include adjusting, by a tire pressure regulator, the tire pressure based on the state information of the tire pressure.

BRIEF DESCRIPTION OF THE DRAWINGS

These and/or other aspects of the invention will become apparent and more readily appreciated from the following description of the embodiments, taken in conjunction with the accompanying drawings of which:

FIG. 1 is a control block diagram of a vehicle according to an exemplary embodiment of the present invention;

FIG. 2 is a view illustrating an interior of a vehicle according to an exemplary embodiment of the present invention;

FIG. 3 is a view for describing optimum tire pressure data corresponding to a weight of a vehicle;

FIG. 4 is a view for describing performance according to adjustment of a tire pressure in a gross vehicle weight condition;

FIGS. 5 to 8 are views illustrating examples of outputting an optimum tire pressure and state information of a tire pressure; and

FIG. 9 is a flowchart for describing a method of controlling a vehicle according to an exemplary embodiment of the present invention.

DETAILED DESCRIPTION

Like reference numerals refer to like elements throughout the specification. Not all elements of embodiments of the invention will be described, and description of what are commonly known in the art or what overlap each other in the embodiments will be omitted. The terms as used throughout the specification, such as "- part," "- module," "- member," "- block," etc., may be implemented in software and/or hardware, and a plurality of "- parts," "- modules," "- members," or "- blocks" may be implemented in a single element, or a single "- part," "- module," "~ member," or "~ block" may include a plurality of elements.

It will be understood that when an element is referred to as being "connected" to another element, it can be directly or indirectly connected to the other element, wherein the indirect connection includes "connection" via a wireless communication network.

When a part "includes" or "comprises" an element, unless there is a particular description contrary thereto, the part may further include other elements, not excluding the other elements.

It will be understood that, although the terms first, second, third, etc., may be used herein to describe various elements, it should not be limited by these terms. These terms are only used to distinguish one element from another element. As used herein, the singular forms "a," "an" and "the" are intended to include the plural forms as well, unless the context clearly indicates otherwise.

As used herein, the terms "portion," "unit," "block," "member," or "module" refer to a unit that can perform at least one function or operation. For example, these terms may refer to at least one process which is performed by at least one piece of hardware such as a field-programmable gate array (FPGA) and an application specific integrated circuit (ASIC), and at least one piece of software stored in a memory or a processor.

An identification code is used for the convenience of the description but is not intended to illustrate the order of each step. Each of the steps may be implemented in an order different from the illustrated order unless the context clearly indicates otherwise.

The principle and embodiments of the invention will now be described with reference to the accompanying drawings.

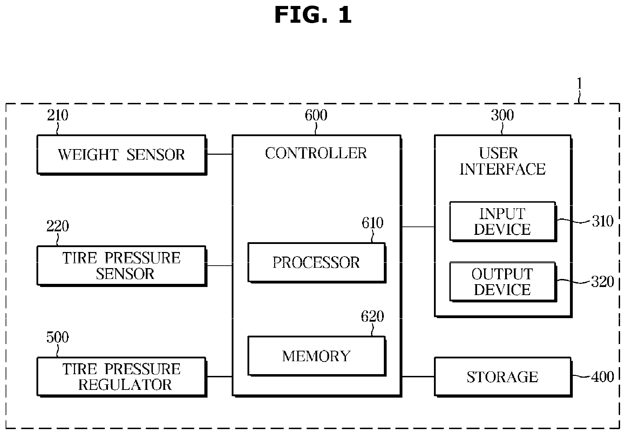

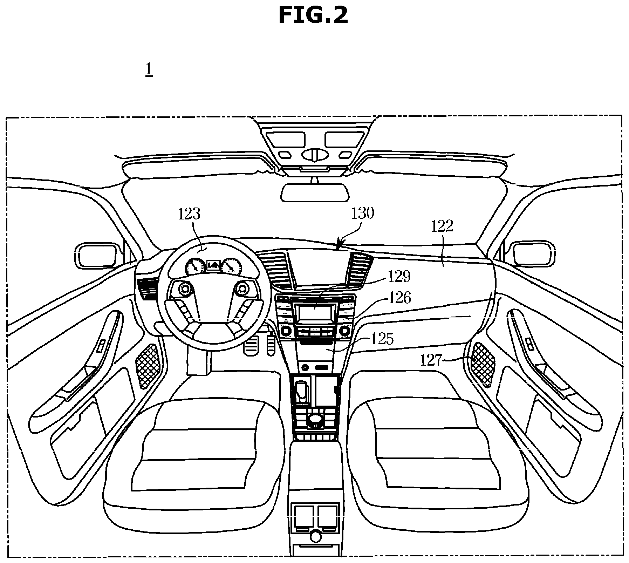

FIG. 1 is a control block diagram of a vehicle according to an exemplary embodiment of the present invention, and FIG. 2 is a view illustrating an interior of a vehicle according to an exemplary embodiment of the present invention.

First, a vehicle 1 may include a body forming an appearance, a windscreen for allowing a driver to see a front view of the vehicle 1, side mirrors for allowing the driver to see a rear view of the vehicle 1, doors for shielding the inside of the vehicle 1 from the outside, a pillar for supporting a roof panel, the roof panel, a rear window glass, a turn signal indicator, front wheels located at the front of the vehicle 1, and rear wheels located at the rear of the vehicle 1. The front wheels and the rear wheels may be referred to as the front left wheel, the front right wheel, the rear left wheel, and the rear right wheel, respectively. Each of the wheels may be provided with a tire, and a tire pressure sensor 220 for measuring a tire pressure may be provided.

A chassis of the vehicle 1 may further include a power generating device, a power transmitting device, a driving device, a steering device, a braking device, an accelerating device, a suspension device, a transmission device, and a fuel device. Further, the vehicle 1 may further include various safety devices for safety of the driver and passengers. As an example of the braking device, a brake pedal may be provided inside the vehicle 1, and an acceleration pedal may be provided inside the vehicle 1 as an example of the accelerating device.

The various safety devices of the vehicle 1 may include an airbag control device for the purpose of passenger safety such as the driver in the event of a vehicle collision and an electronic stability control (ESC) for controlling the attitude during acceleration or cornering.

The vehicle 1 may include an electronic control unit (ECU) for controlling driving of the power generating device, the power transmitting device, the driving device, the steering device, the braking device, the suspension device, the transmission device, the fuel device, the safety devices, and various sensors.

Referring to FIG. 1, the vehicle 1 may include the various sensors. For example, the vehicle 1 may include a weight sensor 210 for measuring or detecting a weight of the vehicle 1 and the tire pressure sensor 220 for measuring or detecting the tire pressure.

The weight sensor 210 may be provided on a body frame and may measure the weight of the vehicle 1. For example, the weight sensor 210 may measure a Complete Vehicle Weight (CVW), and may measure the weight of the vehicle 1 that is increased when a person is boarded or a load is loaded on the vehicle 1. The weight sensor 210 may transmit the measured weight of the vehicle 1 as an electrical signal. A controller 600 may receive a signal including weight information of the vehicle 1 from the weight sensor 210.

On the other hand, the CVW may refer to the weight of the vehicle 1 in a state that the vehicle 1 is loaded with fuel, cooling water, lubricant, etc. without loading the person or the load and equipped with the basic equipment (except spare tires, spare parts, tools, etc.).

A Gross Vehicle Weight (GVW) may refer to the total weight of the vehicle 1 when loading a riding capacity and a maximum load. Under national safety standards, the GVW should not exceed 20 tons (10 tons per axis, 5 tons per wheel). However, the total weight of freight and special vehicles must not exceed 40 tons.

The tire pressure sensor 220 may be installed in the tire of the vehicle 1 to measure the tire pressure and transmit the measured tire pressure as the electrical signal or a radio wave signal. The controller 600 may receive a signal including tire pressure information from the tire pressure sensor 220. The tire pressure sensor 220 may transmit the measured tire pressure either by wire or wirelessly.

The vehicle 1 may also include a proximity sensor for detecting obstacles or other vehicles at the front, rear or sides of the vehicle 1, a rain sensor for detecting rainfall and precipitation, a speed sensor for detecting a speed of the wheels of the vehicle 1, a lateral acceleration sensor for detecting a lateral acceleration of the vehicle 1, a yaw rate sensor for detecting a change in an angular velocity of the vehicle 1, a gyro sensor, and a direction sensor for detecting a rotation of a steering wheel and a driving direction of the vehicle 1.

The various devices of the vehicle 1 may communicate with each other through a vehicle communication network NT. For example, the various devices of the vehicle 1 may receive and transmit data or the electrical signal through Ethernet, MOST (Media Oriented Systems Transport), Flexray, CAN (Controller Area Network), LIN (Local Interconnect Network), etc.

Referring to FIG. 2, the vehicle 1 may include a dashboard 122, an instrument cluster 123 (or cluster) placed on the dashboard 122, and a center fascia 125 including an audio device and a control panel of an air conditioner therein.

The cluster 123 may include a tachometer, a speedometer, a water temperature gauge, a fuel gauge, a turn signal indicator, a head light indicator, a seat belt warning light, an odometer, a tachograph, a gearshift position indicator, a door open warning light, a low fuel warning light, a low oil pressure warning light, a tire pressure warning light, etc. In addition, the cluster 123 may be implemented in a digital manner. The cluster 123 of the digital manner may display vehicle information and driving information as images.

A user interface 300 is an input / output device for performing audio functions, video functions, navigation functions, and various functions of the vehicle 1. The user interface 300 may include an input device 310 for receiving an operation command of various functions and may include an output device 320 for outputting information about a function being executed and information input by a user.

The input device 310 may include at least one physical button such as an on / off button for various functions and an operation button for changing a set value of various functions, and may be provided in a head unit 126 and the center fascia 125. The input device 310 may transmit the input command to the controller 600. The input device 310 may be a touch panel integrally provided on a display of an audio video navigation (AVN) device 130. In addition, the input device 310 may further include a jog dial.

The output device 320 may include the cluster 123, the AVN device 130, and a display 129 of the head unit 126. The cluster 123 and the AVN device 130 may also each include a display for outputting a screen. The display may be a light emitting diode (LED) panel, an organic light emitting diode (OLED) panel, or a liquid crystal display (LCD) panel. In addition, the output device 320 may include a speaker 127 for outputting an audio signal.

A storage 400 may store various data related to the operation of the vehicle 1. The storage 400 may be implemented as at least one of a non-volatile memory device (for example, a cache, Read Only Memory (ROM), Programmable ROM (PROM), Erasable Programmable ROM (EPROM), Electrically Erasable Programmable ROM (EEPROM), and flash memory), a volatile memory device (for example, Random Access Memory (RAM)), or a storage medium (for example, Hard Disk Drive (HDD) and Compact Disc Read Only Memory (CD-ROM)), although not limited to these.

A tire pressure regulator 500 may adjust the tire pressure based on the state information of the tire pressure. The tire pressure regulator 500 may receive the state information of the tire pressure from the controller 600, and may inject air into the tire or discharge the air inside the tire to the outside according to the state information of the tire pressure. The tire pressure regulator 500 may include an air compression pump (not shown).

Hereinafter, the controller 600 will be described in detail.

The controller 600 may include at least one or more processors 610 and a memory 620. The memory 620 may store algorithm data or a program for controlling the vehicle 1 and the processor 610 may transmit a control signal for controlling various devices of the vehicle 1 according to the control algorithm. In addition, the processor 610 may execute a program for the operation of the vehicle 1. The processor 610 and the memory 620 included in the controller 600 may be integrated into one chip or may be physically separated.

The controller 600 may transmit control signals to devices in the vehicle 1 as well as signal distribution functions to various devices provided in the vehicle 1. The controller 600 may refer to an electronic control unit (ECU).

The controller 600 may calculate the weight of the vehicle 1. Particularly, the controller 600 may calculate the weight of the vehicle 1 using engine torque and acceleration. The controller 600 may obtain engine torque information from an engine control device (not shown) and a transmission control device (not shown) provided in the vehicle 1. Further, the controller 600 may obtain the acceleration of the vehicle 1 from an acceleration sensor (not shown) provided in the vehicle 1. The weight of the vehicle 1 may be calculated from an acceleration law. That is, the controller 600 may calculate the weight of the vehicle 1 according to the following Equation 1.

[Equation 1]

F (force) = m (mass) * a (acceleration)

Engine torque = vehicle weight * vehicle acceleration

Meanwhile, the controller 600 may receive the weight information of the vehicle 1 from the weight sensor 210.

The controller 600 may retrieve an optimum tire pressure corresponding to the calculated weight of the vehicle 1 or the weight of the vehicle 1 received from the weight sensor 210.

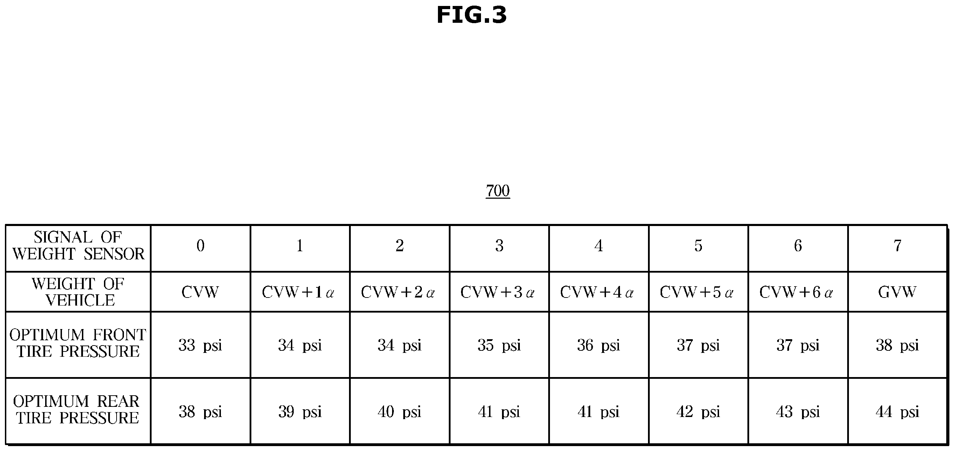

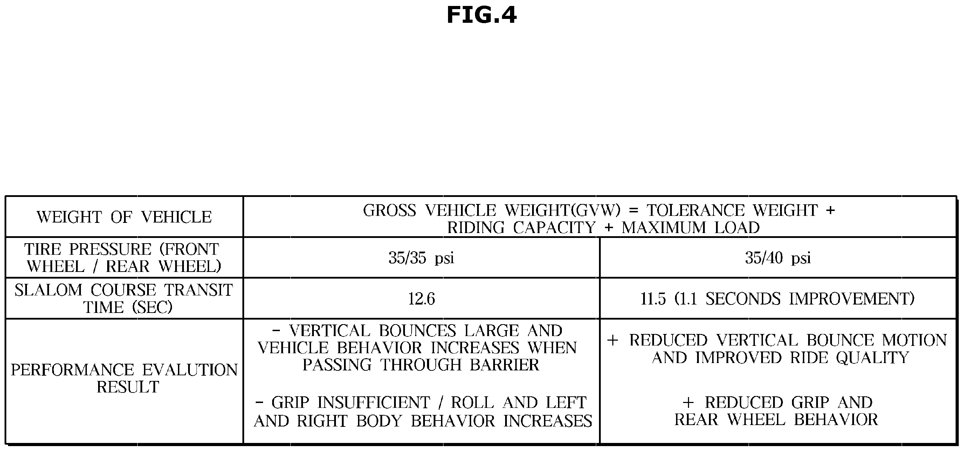

FIG. 3 is a view for describing optimum tire pressure data corresponding to a weight of a vehicle, and FIG. 4 is a view for describing performance according to adjustment of a tire pressure in a gross vehicle weight condition.

Referring to FIG. 3, the storage 400 may store optimum tire pressure data 700 corresponding to the weight of the vehicle 1. The optimum tire pressure data 700 corresponding to the weight of the vehicle 1 may be stored in a table.

When the weight of the vehicle 1 changes, a front tire pressure and a rear tire pressure need to be adjusted differently. Referring to FIG. 4, in a state in which the weight of the vehicle 1 is at the GVW, there is a difference between the performance of the vehicle 1 when the front tire pressure and the rear tire pressure are set the same and the performance of the vehicle 1 when the front tire pressure and the rear tire pressure are set differently.

For example, when both the front tire pressure and the rear tire pressure are equally set to 35 psi, the vehicle 1 takes 12.6 seconds to pass through a slalom course. However, when the front tire pressure is set to 35 psi and the rear tire pressure is set to 40 psi, the vehicle 1 takes 11.5 seconds to pass through the slalom course. That is, in the state in which the weight of the vehicle 1 is at the GVW, when the front tire pressure and the rear tire pressure are set different from each other, the performance of the vehicle 1 is improved. Here, the slalom course may refer to a continuous S-curve course, and may be a course where rubber cones are placed at regular intervals and a zigzag pattern passes through the rubber cones.

In the state in which the weight of the vehicle 1 is at the GVW, when the front tire pressure and the rear tire pressure are set equal to 35 psi, a vertical bounce of the vehicle 1 may become large, and the behavior of the vehicle 1 may be increased when passing through a barrier.

On the other hand, in the state in which the weight of the vehicle 1 is at the GVW, when the front pressure is set to 35 psi and the rear tire pressure is set to 40 psi, the vertical bounce of the vehicle 1 may be reduced and the ride comfort may be improved.

Thus, depending on the weight of the vehicle 1, the front tire pressure and the rear tire pressure need to be adjusted differently, and it is necessary to appropriately inform such information to the user.

To this end, as illustrated in FIG. 3, the optimum tire pressure data 700 corresponding to the weight of the vehicle 1 may be stored in the storage 400 and the controller 600 may use the data stored in the storage 400 to generate the state information of the tire pressure.

On the other hand, the optimum tire pressure data corresponding to the weight of the vehicle 1 may be collected through various experiments or evaluations, and is not limited to that illustrated in FIG. 3.

The controller 600 may retrieve the optimum tire pressure corresponding to the calculated weight of the vehicle 1 or the weight of the vehicle 1 received from the weight sensor 210 from the storage 400, and the controller 600 may compare the optimum tire pressure and the tire pressure measured by the tire pressure sensor 220 to generate the state information of the tire pressure.

Particularly, the controller 600 may generate the state information of the tire pressure by determining whether the state of the tire pressure measured by the tire pressure sensor 220 is in an insufficient state, an appropriate state, or a transient state.

The controller 600 may determine that a state of the measured tire pressure is in the appropriate state when a difference value between the tire pressure measured by the tire pressure sensor 220 and the optimum tire pressure corresponding to the weight of the vehicle 1 retrieved from the storage 400 is a value within a predetermined threshold range.

The controller 600 may also determine that the state of the measured tire pressure is in the insufficient state when the difference value between the tire pressure measured by the tire pressure sensor 220 and the optimum tire pressure corresponding to the weight of the vehicle 1 retrieved from the storage 400 is a negative value outside the predetermined threshold range.

The controller 600 may also determine that the state of the measured tire pressure is in the transient state when the difference value between the tire pressure measured by the tire pressure sensor 220 and the optimum tire pressure corresponding to the weight of the vehicle 1 retrieved from the storage 400 is a positive value outside the predetermined threshold range.

The controller 600 may generate state information of the tire pressure for a front left tire, a front right tire, a rear left tire, and a rear right tire, respectively. The user may receive the state information of a specific tire by operating the user interface 300. The controller 600 may control the user interface 300 to selectively output state information of the tire pressure for each of the front left tire, the front right tire, the rear left tire, and the rear right tire in response to the user's input.

As described above, the optimum tire pressure corresponding to the weight of the vehicle 1 and the state information of the current tire pressure can be provided for each of the tires of the vehicle 1, so that the user may easily and accurately confirm the state of the tire pressure.

The controller 600 may control the cluster 123 such that the state information of the tires is displayed in the cluster 123. The controller 600 may control the device including the display such as the AVN device 130 as well as the cluster 123 to output the state information of the tire.

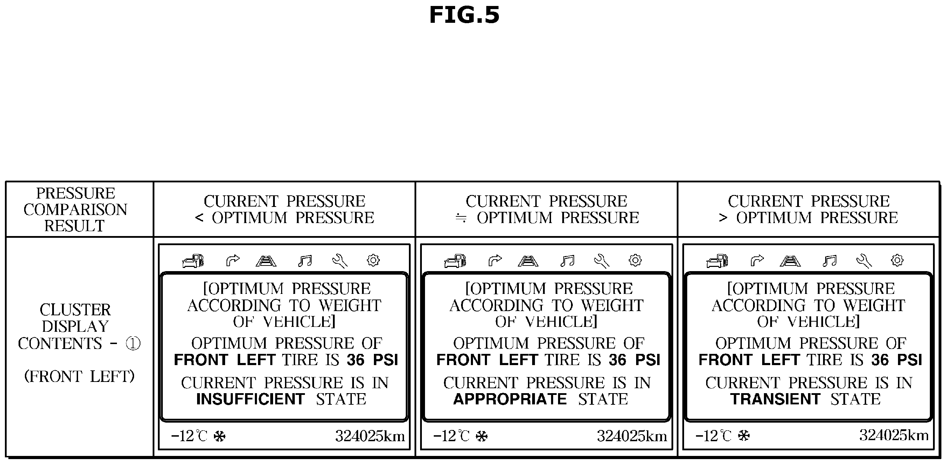

FIGS. 5 to 8 are views illustrating examples of outputting an optimum tire pressure and state information of a tire pressure.

Referring to FIG. 5, when the user inputs a request for state information of the front left tire, the controller 600 may control the cluster 123 such that the state information of the front left tire is displayed in the cluster 123.

When a current pressure of the front left tire is less than the optimum tire pressure corresponding to the weight of the vehicle 1, the controller 600 may display in the cluster 123 that an optimum pressure value of the front left tire and the current tire pressure are insufficient.

When the current pressure of the front left tire is equal to or within the predetermined range of the optimum tire pressure corresponding to the weight of the vehicle 1, the controller 600 may display in the cluster 123 that the optimum pressure value of the front left tire and the current tire pressure are proper.

When the current pressure of the front left tire is greater than the optimum tire pressure corresponding to the weight of the vehicle 1, the controller 600 may display in the cluster 123 that the optimum pressure value of the front left tire and the current tire pressure are in the transient state.

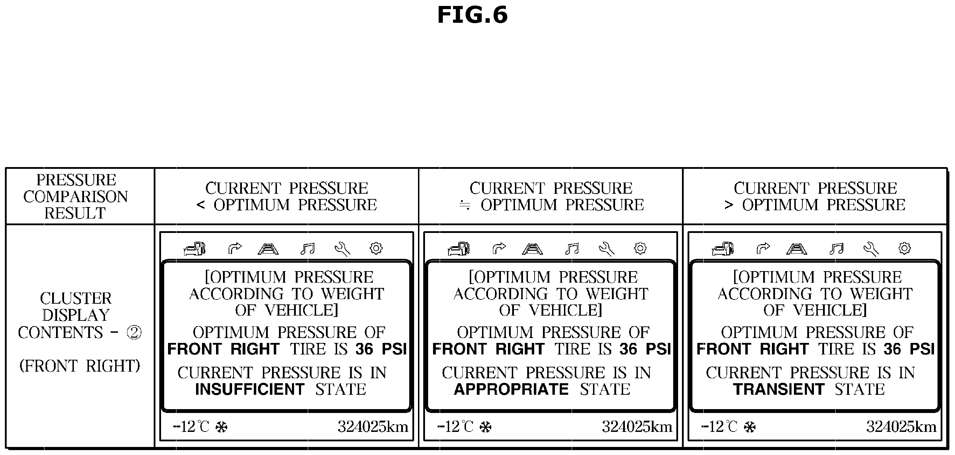

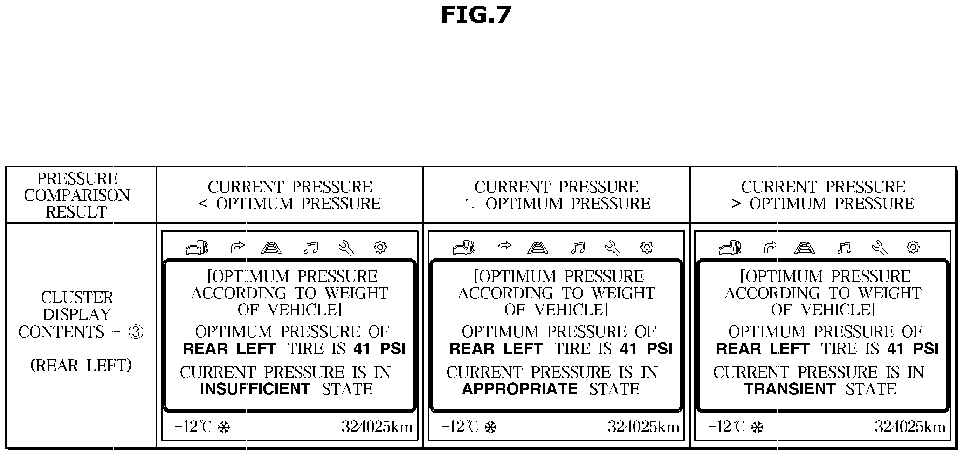

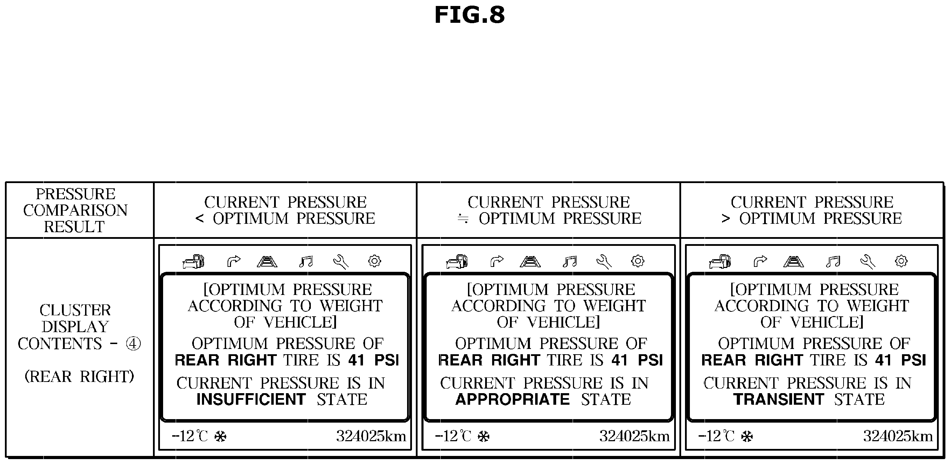

FIG. 6 illustrates the state information of the front right tire, FIG. 7 illustrates the state information of the rear left tire, and FIG. 8 illustrates the state information of the rear right tire. The state information of the front right tire, the rear left tire, and the rear right tire may be displayed in the same manner as the method of displaying the state information of the front left tire described with reference to FIG. 5.

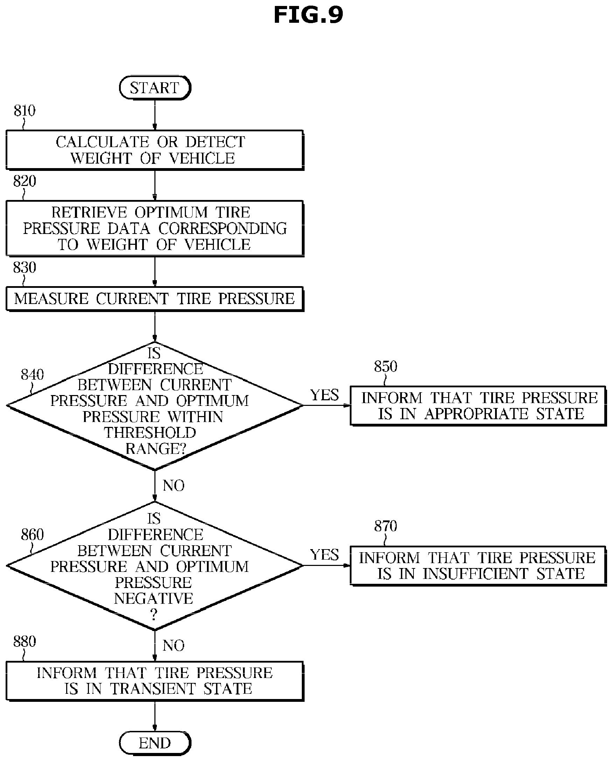

FIG. 9 is a flowchart for describing a method of controlling a vehicle according to an exemplary embodiment of the present invention.

Referring to FIG. 9, the controller 600 of the vehicle 1 may calculate the weight of the vehicle 1 using the engine torque and the acceleration, or may obtain the weight information of the vehicle 1 detected by the weight sensor 210 (810). The controller 600 may retrieve the optimum tire pressure data corresponding to the weight of the vehicle 1 from the storage 400 (820). The controller 600 may also control the tire pressure sensor 220 to measure the tire pressure (830).

The controller 600 may compare the optimum tire pressure corresponding to the weight of the vehicle 1 with the tire pressure measured by the tire pressure sensor 220 to generate the state information of the tire pressure. Particularly, the controller 600 may determine whether the difference value between the tire pressure measured by the tire pressure sensor 220 and the optimum tire pressure corresponding to the weight of the vehicle 1 is the value within the predetermined threshold range (840).

When the difference value between the tire pressure measured by the tire pressure sensor 220 and the optimum tire pressure corresponding to the weight of the vehicle 1 is the value within the predetermined threshold range, the controller 600 may determine that the measured state of the tire pressure is in the appropriate state. The controller 600 may generate the state information of the tire pressure including the optimum tire pressure value corresponding to the weight of the vehicle 1 and the state of the tire pressure in the appropriate state, and may control the user interface 300 to output the state information of the tire pressure (850).

When the difference value between the tire pressure measured by the tire pressure sensor 220 and the optimum tire pressure corresponding to the weight of the vehicle 1 is the negative value outside the predetermined threshold range, the controller 600 may determine that the measured state of the tire pressure is in the insufficient state. The controller 600 may generate the state information of the tire pressure including the optimum tire pressure value corresponding to the weight of the vehicle 1 and the state of the tire pressure in the insufficient state, and may control the user interface 300 to output the state information of the tire pressure (860, 870).

When the difference value between the tire pressure measured by the tire pressure sensor 220 and the optimum tire pressure corresponding to the weight of the vehicle 1 is the positive value outside the predetermined threshold range, the controller 600 may determine that the measured state of the tire pressure is in the transient state. The controller 600 may generate the state information of the tire pressure including the optimum tire pressure value corresponding to the weight of the vehicle 1 and the state of the tire pressure in the transient state, and may control the user interface 300 to output the state information of the tire pressure (860, 880).

Conventionally, a sticker describing tire pressure information related to the weight of the vehicle has been attached to the bottom of the pillar of the vehicle or the inside of the doors. However, since it is difficult for the user to recognize the sticker, it is difficult for the user to know the appropriate tire pressure information corresponding to the weight of the vehicle. Therefore, there is a problem that it is difficult to control the tire pressure appropriately.

According to the vehicle of an aspect and the method of controlling the vehicle as described above, it is possible to calculate the weight of the vehicle and intuitively provide the optimum tire pressure information corresponding to the calculated weight of the vehicle and the state information of the current tire pressure.

Further, according to the vehicle of another aspect and the method of controlling the vehicle, the tire pressure can be appropriately adjusted based on the state information of the tire pressure according to the weight of the vehicle, and thus the driving stability of the vehicle can be improved.

Meanwhile, the disclosed embodiments may be implemented in the form of a recording medium storing instructions that are executable by a computer. The instructions may be stored in the form of a program code, and when executed by a processor, the instructions may generate a program module to perform operations of the disclosed embodiments. The recording medium may be implemented as a computer-readable recording medium.

The computer-readable recording medium may include all kinds of recording media storing commands that can be interpreted by a computer. For example, the computer-readable recording medium may be ROM, RAM, a magnetic tape, a magnetic disc, flash memory, an optical data storage device, etc.

The exemplary embodiments of the invention have thus far been described with reference to the accompanying drawings. It will be obvious to those of ordinary skill in the art that the invention may be practiced in other forms than the exemplary embodiments as described above without changing the technical idea or essential features of the invention. The above exemplary embodiments are only by way of example, and should not be interpreted in a limited sense.

## Claims

1. A vehicle (1) comprising:

   a tire pressure sensor (220) installed on a tire, wherein the tire pressure sensor (220) is configured to:

   measure a tire pressure, and
   transmit the tire pressure as an electrical signal;

   a storage (400) configured to store optimum tire pressure data (700) corresponding to a weight of the vehicle (1);
   a controller (600) configured to:

   calculate the weight of the vehicle;
   compare the tire pressure with the optimum tire pressure corresponding to the weight of the vehicle (1);
   determine whether a difference value between the tire pressure and the optimum tire pressure corresponding to the weight of the vehicle (1) is the value within a predetermined threshold range; and
   generate state information of the tire pressure based on the determined difference value,

   a user interface (300) configured to output the state information of the tire pressure,
   wherein the state information of the tire pressure includes an insufficient state, an appropriate state, or a transient state,
   **characterized in that**
   the controller (600) is further configured to
   generate the state information of the tire pressure for each of a front left tire, a front right tire, a rear left tire, and a rear right tire, and
control the user interface (300) to selectively output the state information of the tire pressure for each of the front left tire, the front right tire, the rear left tire, and the rear right tire in response to a user's input.

2. The vehicle according to claim 1, wherein the controller (600) is configured to determine that a state of the tire pressure is in the appropriate state when the difference value between the tire pressure and the optimum tire pressure is a value within a threshold range.

3. The vehicle according to claim 1 or 2, wherein the controller (600) is configured to determine that a state of the tire pressure is in the insufficient state when the difference value between the tire pressure and the optimum tire pressure is a negative value outside a threshold range.

4. The vehicle according to one of claims 1-3, wherein the controller (600) is configured to determine that a state of the tire pressure is in the transient state when the difference value between the tire pressure and the optimum tire pressure is a positive value outside a threshold range.

5. The vehicle according to one of claims 1-4, wherein the controller (600) is configured to calculate the weight of the vehicle (1) using engine torque and acceleration.

6. The vehicle according to one of claims 1-5, further comprising a weight sensor (210) configured to:

   measure the weight of the vehicle (1), and
   transmit the weight of the vehicle (1) as the electrical signal,
   wherein the controller (600) is configured to receive weight information of the vehicle (1) from the weight sensor (210).

7. The vehicle according to one of claims 1-6, further comprising
a tire pressure regulator (500) configured to adjust the tire pressure based on the state information of the tire pressure.

8. A method of controlling a vehicle (1) comprising:

   calculating, by a controller (600), a weight of the vehicle (1);
   retrieving, by the controller (600), optimum tire pressure data (700) corresponding to the calculated weight of the vehicle (1);
   measuring a tire pressure using a tire pressure sensor (220);
   determining, by the controller (600), whether a difference value between the tire pressure and the optimum tire pressure data corresponding to the weight of the vehicle (1) is the value within a predetermined threshold range;
   generating, by the controller (600), state information of the tire pressure based on the determined difference value;
   **characterized by**
   generating the state information of the tire pressure for each of a front left tire, a front right tire, a rear left tire, and a rear right tire, and
   outputting, by the controller (600), selectively the state information of the tire pressure for each of the front left tire, the front right tire, the rear left tire, and the rear right tire in response to a user's input through a user interface (300),
   wherein the state information of the tire pressure includes an insufficient state, an appropriate state, or a transient state.

9. The method according to claim 8, wherein the generating state information of the tire pressure comprises determining that a state of the tire pressure is in the appropriate state when the difference value between the tire pressure and the optimum tire pressure is a value within a threshold range.

10. The method according to claim 8 or 9, wherein the generating state information of the tire pressure comprises determining that a state of the tire pressure is in the insufficient state when the difference value between the tire pressure and the optimum tire pressure is a negative value outside a threshold range.

11. The method according to one of claims 8-10, wherein the generating state information of the tire pressure comprises determining that a state of the tire pressure is in the transient state when the difference value between the tire pressure and the optimum tire pressure is a positive value outside a threshold range.

**Patentansprüche**

1. Ein Fahrzeug (1), aufweisend:

   einen Reifendrucksensor (220), welcher an einem Reifen installiert ist, wobei der Reifendrucksensor (220) dazu eingerichtet ist:

   einen Reifendruck zu messen, und
   den Reifendruck als ein elektrisches Signal zu übertragen;

   einen Speicher (400), welcher dazu eingerichtet ist, optimale Reifendruckdaten (700), welche einem Gewicht des Fahrzeugs (1) zugehörig sind, zu speichern;
   eine Steuereinrichtung (600), welche dazu eingerichtet ist:

   das Gewicht des Fahrzeugs zu berechnen;
   den Reifendruck mit dem optimalen Reifendruck, welcher zu dem Gewicht des Fahrzeugs (1) gehört, zu vergleichen,
   zu ermitteln, ob ein Differenzwert zwischen dem Reifendruck und dem optimalen Reifendruck, welcher zu dem Gewicht des Fahrzeugs (1) gehört, der Wert innerhalb eines vorbestimmten Schwellenwertbereichs ist, und
   eine Zustandsinformation des Reifendrucks auf Grundlage des ermittelten Differenzwerts zu erzeugen,

   eine Benutzerschnittstelle (300), welche dazu eingerichtet ist, die Zustandsinformation über den Reifendruck auszugeben,
   wobei die Zustandsinformation des Reifendrucks einen unzureichenden Zustand, einen angemessenen Zustand oder einen transienten Zustand aufweist,
   **dadurch gekennzeichnet, dass**
   die Steuereinrichtung (600) ferner eingerichtet dazu ist,
   die Zustandsinformation des Reifendrucks für jeden von einem linken Vorderreifen, einem rechten Vorderreifen, einem linken Hinterreifen und einem rechten Hinterreifen zu erzeugen, und
   die Benutzerschnittstelle (300) so zu steuern, dass sie die Zustandsinformation des Reifendrucks für jeden von dem vorderen linken Reifen, dem vorderen rechten Reifen, dem hinteren linken Reifen und dem hinteren rechten Reifen in Reaktion auf eine Benutzereingabe selektiv ausgibt.

2. Das Fahrzeug nach Anspruch 1, wobei die Steuereinrichtung (600) dazu eingerichtet ist, zu ermitteln, dass ein Zustand des Reifendrucks in dem angemessenen Zustand ist, wenn der Differenzwert zwischen dem Reifendruck und dem optimalen Reifendruck ein Wert innerhalb eines Schwellenwertbereichs ist.

3. Das Fahrzeug nach Anspruch 1 oder 2, wobei die Steuereinrichtung (600) dazu eingerichtet ist, zu ermitteln, dass sich ein Zustand des Reifendrucks in dem unzureichenden Zustand befindet, wenn der Differenzwert zwischen dem Reifendruck und dem optimalen Reifendruck ein negativer Wert außerhalb eines Schwellenwertbereichs ist.

4. Das Fahrzeug nach einem der Ansprüche 1 - 3, wobei die Steuereinrichtung (600) dazu eingerichtet ist, zu ermitteln, dass sich ein Zustand des Reifendrucks in dem transienten Zustand befindet, wenn der Differenzwert zwischen dem Reifendruck und dem optimalen Reifendruck ein positiver Wert außerhalb eines Schwellenwertbereichs ist.

5. Das Fahrzeug nach einem der Ansprüche 1 - 4, wobei die Steuereinrichtung (600) dazu eingerichtet ist, das Gewicht des Fahrzeugs (1) unter Verwendung des Verbrennungsmotordrehmoments und der Beschleunigung zu berechnen.

6. Das Fahrzeug nach einem der Ansprüche 1 - 5, ferner aufweisend einen Gewichtssensor (210), welcher dazu eingerichtet ist:

   das Gewicht des Fahrzeugs (1) zu messen, und
   das Gewicht des Fahrzeugs (1) als elektrisches Signal zu übertragen,
   wobei die Steuereinrichtung (600) dazu eingerichtet ist, Gewichtsinformationen des Fahrzeugs (1) von dem Gewichtssensor (210) zu empfangen.

7. Das Fahrzeug nach einem der Ansprüche 1 - 6, ferner aufweisend
einen Reifendruckregulator (500), welcher dazu eingerichtet ist, den Reifendruck auf Grundlage der Zustandsinformation des Reifendrucks einzustellen.

8. Ein Verfahren zur Steuerung eines Fahrzeugs (1), aufweisend:

Berechnen, durch eine Steuereinrichtung (600), eines Gewichts des Fahrzeugs (1);
Abrufen, durch die Steuereinrichtung (600), von optimalen Reifendruckdaten (700), welche zu dem berechneten Gewicht des Fahrzeugs (1) zugehörig sind;
Messen eines Reifendrucks unter Verwendung eines Reifendrucksensors (220);
Ermitteln, durch die Steuereinrichtung (600), ob ein Differenzwert zwischen dem Reifendruck und den optimalen Reifendruckdaten, welche zu dem Gewicht des Fahrzeugs (1) gehören, der Wert innerhalb eines vorbestimmten Schwellenwertbereichs ist;
Erzeugen, durch die Steuereinrichtung (600), einer Zustandsinformation des Reifendrucks basierend auf dem ermittelten Differenzwert;
**gekennzeichnet durch**
Erzeugen der Zustandsinformation des Reifendrucks für jeden von einem linken Vorderreifen, einem rechten Vorderreifen, einem linken Hinterreifen und einem rechten Hinterreifen, und
selektives Ausgeben, durch die Steuereinrichtung (600), der Zustandsinformation des Reifendrucks für jeden von dem vorderen linken Reifen, dem vorderen rechten Reifen, dem hinteren linken Reifen und dem hinteren rechten Reifens in Reaktion auf eine Benutzereingabe durch eine Benutzerschnittstelle (300),
wobei die Zustandsinformation des Reifendrucks einen unzureichenden Zustand, einen angemessenen Zustand oder einen transienten Zustand aufweist.

9. Verfahren nach Anspruch 8, wobei das Erzeugen einer Zustandsinformation des Reifendrucks aufweist
Ermitteln, dass ein Zustand des Reifendrucks in dem angemessenen Zustand ist, wenn der Differenzwert zwischen dem Reifendruck und dem optimalen Reifendruck ein Wert innerhalb eines Schwellenwertbereichs ist.

10. Verfahren nach Anspruch 8 oder 9, wobei das Erzeugen einer Zustandsinformation des Reifendrucks aufweist
Ermitteln, dass ein Zustand des Reifendrucks in dem unzureichenden Zustand ist, wenn der Differenzwert zwischen dem Reifendruck und dem optimalen Reifendruck ein negativer Wert außerhalb eines Schwellenwertbereichs ist.

11. Verfahren nach einem der Ansprüche 8 - 10, wobei das Erzeugen einer Zustandsinformation des Reifendrucks aufweist
Ermitteln, dass ein Zustand des Reifendrucks in dem transienten Zustand ist, wenn der Differenzwert zwischen dem Reifendruck und dem optimalen Reifendruck ein positiver Wert außerhalb eines Schwellenwertbereichs ist.

**Revendications**

1. Véhicule (1), comprenant :

un capteur de pression de pneu (220) installé sur un pneu, dans lequel le capteur de pression de pneu (220) est configuré pour :

mesurer une pression de pneu, et
transmettre la pression de pneu sous forme de signal électrique ;

une mémoire (400) configurée pour stocker des données de pression de pneu optimale (700) correspondant à un poids du véhicule (1) ;
un contrôleur (600) configuré pour :

calculer le poids du véhicule ;
comparer la pression de pneu à la pression de pneu optimale correspondant au poids du véhicule (1) ;
déterminer si une valeur de différence entre la pression de pneu et la pression de pneu optimale correspondant au poids du véhicule (1) est la valeur comprise dans une plage de seuils prédéterminée ; et

générer des informations d'état de la pression de pneu sur la base de la valeur de différence déterminée,

une interface utilisateur (300) configurée pour émettre les informations d'état de la pression de pneu,
où les informations d'état de la pression de pneu comprennent un état insuffisant, un état approprié ou un état transitoire,
**caractérisé en ce que**
le contrôleur (600) est en outre configuré pour
générer les informations d'état de la pression de pneu pour chacun d'un pneu avant gauche, d'un pneu avant droit, d'un pneu arrière gauche et d'un pneu arrière droit, et
commander l'interface utilisateur (300) pour émettre sélectivement les informations d'état de la pression de pneu pour chacun du pneu avant gauche, du pneu avant droit, du pneu arrière gauche et du pneu arrière droit en réponse à une entrée d'un utilisateur.

2. Véhicule selon la revendication 1, dans lequel le contrôleur (600) est configuré pour déterminer qu'un état de la pression de pneu est dans l'état approprié lorsque la valeur de différence entre la pression de pneu et la pression de pneu optimale est une valeur comprise dans une plage de seuils.

3. Véhicule selon la revendication 1 ou 2, dans lequel le contrôleur (600) est configuré pour déterminer qu'un état de la pression de pneu est dans l'état insuffisant lorsque la valeur de différence entre la pression de pneu et la pression de pneu optimale est une valeur négative en dehors d'une plage de seuils.

4. Véhicule selon l'une des revendications 1 à 3, dans lequel le contrôleur (600) est configuré pour déterminer qu'un état de la pression de pneu est dans l'état transitoire lorsque la valeur de différence entre la pression de pneu et la pression de pneu optimale est une valeur positive en dehors d'une plage de seuils.

5. Véhicule selon l'une des revendications 1 à 4, dans lequel le contrôleur (600) est configuré pour calculer le poids du véhicule (1) en utilisant le couple de moteur et l'accélération.

6. Véhicule selon l'une des revendications 1 à 5, comprenant en outre un capteur de poids (210) configuré pour :

mesurer le poids du véhicule (1), et
transmettre le poids du véhicule (1) sous forme de signal électrique,
dans lequel le contrôleur (600) est configuré pour recevoir des informations de poids du véhicule (1) à partir du capteur de poids (210).

7. Véhicule selon l'une des revendications 1 à 6, comprenant en outre :
un régulateur de pression de pneu (500) configuré pour ajuster la pression de pneu sur la base des informations d'état de la pression de pneu.

8. Procédé de contrôle d'un véhicule (1) comprenant :

le calcul, par un contrôleur (600), du poids du véhicule (1) ;
la récupération, par le contrôleur (600), de données de pression optimale de pneu (700) correspondant au poids calculé du véhicule (1) ;
la mesure d'une pression de pneu en utilisant un capteur de pression de pneu (220) ;
la détermination, par le contrôleur (600), si une valeur de différence entre la pression de pneu et les données de pression optimale de pneu correspondant au poids du véhicule (1) est la valeur comprise dans une plage de seuils prédéterminée ;
la génération, par le contrôleur (600), d'informations d'état de la pression de pneu sur la base de la valeur de différence déterminée ;
**caractérisé par**
la génération des informations d'état de la pression de pneu pour chacun d'un pneu avant gauche, d'un pneu avant droit, d'un pneu arrière gauche et d'un pneu arrière droit, et
l'émission, par le contrôleur (600), de manière sélective, des informations d'état de la pression de pneu pour chacun du pneu avant gauche, du pneu avant droit, du pneu arrière gauche et du pneu arrière droit en réponse à une entrée d'un utilisateur par l'intermédiaire d'une interface utilisateur (300),
où les informations d'état de la pression de pneu comprennent un état insuffisant, un état approprié ou un état transitoire.

**9.** Procédé selon la revendication 8, dans lequel la génération d'informations d'état de la pression de pneu comprend la détermination qu'un état de la pression de pneu est dans l'état approprié lorsque la valeur de différence entre la pression de pneu et la pression de pneu optimale est une valeur comprise dans une plage de seuils.

**10.** Procédé selon la revendication 8 ou 9, dans lequel la génération d'informations d'état de la pression de pneu comprend
la détermination qu'un état de la pression de pneu est dans l'état insuffisant lorsque la valeur de différence entre la pression de pneu et la pression de pneu optimale est une valeur négative en dehors d'une plage de seuils.

**11.** Procédé selon l'une des revendications 8 à 10, dans lequel la génération d'informations d'état de la pression de pneu comprend
la détermination qu'un état de la pression de pneu est dans l'état transitoire lorsque la valeur de différence entre la pression de pneu et la pression de pneu optimale est une valeur positive en dehors d'une plage de seuils.

# FIG. 1

# FIG.2

# FIG.3

700

| SIGNAL OF WEIGHT SENSOR | 0 | 1 | 2 | 3 | 4 | 5 | 6 | 7 |
|---|---|---|---|---|---|---|---|---|
| WEIGHT OF VEHICLE | CVW | CVW+1$\alpha$ | CVW+2$\alpha$ | CVW+3$\alpha$ | CVW+4$\alpha$ | CVW+5$\alpha$ | CVW+6$\alpha$ | GVW |
| OPTIMUM FRONT TIRE PRESSURE | 33 psi | 34 psi | 34 psi | 35 psi | 36 psi | 37 psi | 37 psi | 38 psi |
| OPTIMUM REAR TIRE PRESSURE | 38 psi | 39 psi | 40 psi | 41 psi | 41 psi | 42 psi | 43 psi | 44 psi |

EP 3 656 585 B1

**FIG.4**

| WEIGHT OF VEHICLE | GROSS VEHICLE WEIGHT(GVW) = TOLERANCE WEIGHT + RIDING CAPACITY + MAXIMUM LOAD | |
|---|---|---|
| TIRE PRESSURE (FRONT WHEEL / REAR WHEEL) | 35/35 psi | 35/40 psi |
| SLALOM COURSE TRANSIT TIME (SEC) | 12.6 | 11.5 (1.1 SECONDS IMPROVEMENT) |
| PERFORMANCE EVALUTION RESULT | – VERTICAL BOUNCES LARGE AND VEHICLE BEHAVIOR INCREASES WHEN PASSING THROUGH BARRIER<br><br>– GRIP INSUFFICIENT / ROLL AND LEFT AND RIGHT BODY BEHAVIOR INCREASES | + REDUCED VERTICAL BOUNCE MOTION AND IMPROVED RIDE QUALITY<br><br>+ REDUCED GRIP AND REAR WHEEL BEHAVIOR |

EP 3 656 585 B1

# FIG.5

| PRESSURE COMPARISON RESULT | CURRENT PRESSURE < OPTIMUM PRESSURE | CURRENT PRESSURE ≒ OPTIMUM PRESSURE | CURRENT PRESSURE > OPTIMUM PRESSURE |
|---|---|---|---|
| CLUSTER DISPLAY CONTENTS - ① (FRONT LEFT) | [OPTIMUM PRESSURE ACCORDING TO WEIGHT OF VEHICLE] OPTIMUM PRESSURE OF **FRONT LEFT** TIRE IS **36 PSI** CURRENT PRESSURE IS IN **INSUFFICIENT** STATE  −12℃ ✳ 324025km | [OPTIMUM PRESSURE ACCORDING TO WEIGHT OF VEHICLE] OPTIMUM PRESSURE OF **FRONT LEFT** TIRE IS **36 PSI** CURRENT PRESSURE IS IN **APPROPRIATE** STATE  −12℃ ✳ 324025km | [OPTIMUM PRESSURE ACCORDING TO WEIGHT OF VEHICLE] OPTIMUM PRESSURE OF **FRONT LEFT** TIRE IS **36 PSI** CURRENT PRESSURE IS IN **TRANSIENT** STATE  −12℃ ✳ 324025km |

# FIG.6

| PRESSURE COMPARISON RESULT | CURRENT PRESSURE < OPTIMUM PRESSURE | CURRENT PRESSURE ≒ OPTIMUM PRESSURE | CURRENT PRESSURE > OPTIMUM PRESSURE |
|---|---|---|---|
| CLUSTER DISPLAY CONTENTS – ② (FRONT RIGHT) | [OPTIMUM PRESSURE ACCORDING TO WEIGHT OF VEHICLE] OPTIMUM PRESSURE OF **FRONT RIGHT** TIRE IS **36 PSI** CURRENT PRESSURE IS IN **INSUFFICIENT** STATE  −12℃ ❄  324025km | [OPTIMUM PRESSURE ACCORDING TO WEIGHT OF VEHICLE] OPTIMUM PRESSURE OF **FRONT RIGHT** TIRE IS **36 PSI** CURRENT PRESSURE IS IN **APPROPRIATE** STATE  −12℃ ❄  324025km | [OPTIMUM PRESSURE ACCORDING TO WEIGHT OF VEHICLE] OPTIMUM PRESSURE OF **FRONT RIGHT** TIRE IS **36 PSI** CURRENT PRESSURE IS IN **TRANSIENT** STATE  −12℃ ❄  324025km |

EP 3 656 585 B1

**FIG.7**

| PRESSURE COMPARISON RESULT | CURRENT PRESSURE < OPTIMUM PRESSURE | CURRENT PRESSURE ≐ OPTIMUM PRESSURE | CURRENT PRESSURE > OPTIMUM PRESSURE |
|---|---|---|---|
| CLUSTER DISPLAY CONTENTS – ③ (REAR LEFT) | [OPTIMUM PRESSURE ACCORDING TO WEIGHT OF VEHICLE] OPTIMUM PRESSURE OF **REAR LEFT** TIRE IS **41 PSI** CURRENT PRESSURE IS IN **INSUFFICIENT** STATE  −12℃ ❄ 324025km | [OPTIMUM PRESSURE ACCORDING TO WEIGHT OF VEHICLE] OPTIMUM PRESSURE OF **REAR LEFT** TIRE IS **41 PSI** CURRENT PRESSURE IS IN **APPROPRIATE** STATE  −12℃ ❄ 324025km | [OPTIMUM PRESSURE ACCORDING TO WEIGHT OF VEHICLE] OPTIMUM PRESSURE OF **REAR LEFT** TIRE IS **41 PSI** CURRENT PRESSURE IS IN **TRANSIENT** STATE  −12℃ ❄ 324025km |

# FIG.8

EP 3 656 585 B1

| PRESSURE COMPARISON RESULT | CURRENT PRESSURE < OPTIMUM PRESSURE | CURRENT PRESSURE ≒ OPTIMUM PRESSURE | CURRENT PRESSURE > OPTIMUM PRESSURE |
|---|---|---|---|
| CLUSTER DISPLAY CONTENTS – ④ (REAR RIGHT) | [OPTIMUM PRESSURE ACCORDING TO WEIGHT OF VEHICLE] OPTIMUM PRESSURE OF **REAR RIGHT** TIRE IS **41 PSI** CURRENT PRESSURE IS IN **INSUFFICIENT** STATE —12℃ ❄ 324025km | [OPTIMUM PRESSURE ACCORDING TO WEIGHT OF VEHICLE] OPTIMUM PRESSURE OF **REAR RIGHT** TIRE IS **41 PSI** CURRENT PRESSURE IS IN **APPROPRIATE** STATE —12℃ ❄ 324025km | [OPTIMUM PRESSURE ACCORDING TO WEIGHT OF VEHICLE] OPTIMUM PRESSURE OF **REAR RIGHT** TIRE IS **41 PSI** CURRENT PRESSURE IS IN **TRANSIENT** STATE —12℃ ❄ 324025km |

# FIG.9

START

810 CALCULATE OR DETECT
WEIGHT OF VEHICLE

820 RETRIEVE OPTIMUM TIRE
PRESSURE DATA CORRESPONDING
TO WEIGHT OF VEHICLE

830 MEASURE CURRENT TIRE PRESSURE

840 IS
DIFFERENCE
BETWEEN CURRENT
PRESSURE AND OPTIMUM
PRESSURE WITHIN
THRESHOLD
RANGE?

YES → 850 INFORM THAT TIRE PRESSURE
IS IN APPROPRIATE STATE

NO

860 IS
DIFFERENCE
BETWEEN CURRENT
PRESSURE AND OPTIMUM
PRESSURE
NEGATIVE
?

YES → 870 INFORM THAT TIRE PRESSURE
IS IN INSUFFICIENT STATE

NO

880 INFORM THAT TIRE PRESSURE
IS IN TRANSIENT STATE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9511634 B2
- US 2017359957 A1
- WO 2012082019 A1
- JP 2001304948 A
- US 2017225535 A1